# FASCICULE DE BREVET EUROPEEN

(11) **EP 0 399 924 B1**
(45) Date de publication et mention de la délivrance du brevet: **13.01.1993**
(21) Numéro de dépôt: 90420227.2
(22) Date de dépôt: 15.05.1990
(51) Int. Cl.: B23C 3/05

(54) **Outillage pour usinage de précision par exemple pour la rectification de sièges de soupape**
Werkzeuge zur Präzisionsbearbeitung von zum Beispiel Ventilsitzen
Tools for precision working, of valve seats, for example

(30) Priorité: 22.05.1989 FR 8906970; 22.06.1989 FR 8908580
(43) Date de publication de la demande: 28.11.1990
(73) Titulaire: SERDI - SOCIETE D'ETUDE DE REALISATION ET DE DIFFUSION INDUSTRIELLES, Annecy (Haute-Savoie) (FR)
(72) Inventeur: Leroux, Jacques, F-74940 Annecy-le-Vieux (FR); Gallez, François, F-74000 Annecy (FR)
(74) Mandataire: Guerre, Dominique

(56) Documents cités:
- EP-A- 0 344 077
- WO-A-80/01365
- FR-A- 1 220 437
- FR-A- 1 555 211
- US-A- 1 882 689
- US-A- 3 443 480
- US-A- 3 516 329

## Description

La présente invention concerne un outillage pour usinage de précision. Par usinage de précision, on entend tout travail d'une pièce métallique avec un outil de coupe, qu'il s'agisse d'un alésage, fraisage, taraudage, d'une rectification, ou de toute autre forme de travail des métaux, par enlèvement d'un copeau ou qu'il s'agisse d'un outil d'abrasion, par enlèvement de particules métalliques.

La présente invention est présentée et décrite par référence à la rectification de sièges de soupape de moteurs thermiques.

Selon le document FR-A-1 555 211, et dans le domaine de la rectification des sièges de soupape, on connaît un outillage léger de rectification comprenant :
- un support comportant des moyens de solidarisation magnétique sur la pièce à usiner, c'est-à-dire la culasse du moteur thermique
- un fourreau pourvu d'une noix sphérique d'orientation, laquelle est montée sur un bras du support magnétique ; le fourreau présente un perçage transversal dont l'axe passe par le centre de la noix sphérique
- une broche montée librement en rotation et en translation dans le perçage transversal du fourreau
- une tige-pilote coaxiale à l'axe de la broche, prolongeant cette dernière à une extrémité, destinée à pénétrer de manière ajustée dans un trou de référence, c'est-à-dire le guide d'une tige de soupape
- une vis ou moyen de blocage du fourreau en orientation, à l'extrémité avant du bras du support magnétique
- un outil d'usinage en rotation, monté à l'extrémité de la broche du côté de la tige-pilote, par l'intermédiaire d'un dispositif porte-outil
- un moyen de réglage en hauteur de la broche avec tige-pilote, dit de "prise de passe", par rapport au fourreau ; ce moyen consiste en un capuchon, monté sur ledit fourreau, à l'opposé de l'outil d'usinage, rappelé vers le haut par un ressort, et pouvant être manipulé vers le bas par un levier
- un moyen d'entraînement en rotation, de type manuel, à l'opposé de l'outil d'usinage.

De manière plus récente, on a proposé et commercialisé un outillage de rectification se différenciant de l'outillage décrit précédemment sur les points suivants :
- il comporte un boîtier sur la pièce à usiner, solidarisé de manière appropriée sur la pièce à usiner
- ce boîtier contient deux sièges de sphéricité concave complémentaire à la noix sphérique, et disposés de part et d'autre de cette dernière ; le boîtier comprend par ailleurs deux ouvertures permettant le passage et le débattement du fourreau et de la broche
- et le moyen de blocage du fourreau en orientation consiste en un moyen mécanique de serrage des deux sièges de sphéricité complémentaire.

La présente invention a pour objet un outil du type précédemment défini, adapté à la rectification de sièges de soupapes de moteurs thermiques, de faible puissance, comme ceux des tondeuses à gazon ou des groupes électrogènes portatifs.

Selon la présente invention, en combinaison :
a) la broche et la tige pilote sont construites de manière monobloc selon un seul et même arbre d'usinage interchangeable, comportant selon sa hauteur une première partie ou moyeu formant broche, ayant un diamètre nominal, et une deuxième partie de diamètre plus faible, formant tige pilote
b) la ou les pièces dudit outillage, situées à l'extérieur du boîtier et du côté opposé à l'outil d'usinage, par exemple le moyen de réglage en hauteur de l'arbre d'usinage, déterminent ensemble un trou d'extraction dudit arbre d'usinage, aligné selon l'axe du perçage transversal du fourreau, et de diamètre au moins égal au diamètre nominal
c) une pièce adaptatrice supportant l'outil d'usinage est montée de manière coulissante sur le moyeu ou broche de l'arbre d'usinage, et câlée sur l'extrémité de ce dernier du côté de la tige-pilote, par au moins un moyen réversible de blocage accessible à l'utilisateur par le moyen de solidarisation du boîtier, ceci permettant l'extraction de l'arbre d'usinage interchangeable par le trou d'extraction situé à l'extérieur du boîtier
d) le moyen de réglage en hauteur de l'arbre d'usinage comporte, d'une part un manchon d'accouplement en rotation avec le moyeu de l'arbre d'usinage, mobile en translation par rapport au fourreau, et d'autre part un moyen réversible de blocage en rotation du manchon par rapport au moyeu, tel qu'une vis, accessible à une manipulation par l'extérieur de l'utilisateur.

Grâce à l'invention, l'outillage étant mis en place, il devient possible d'interchanger l'arbre d'usinage, et donc la tige-pilote, en laissant l'outillage à demeure sur la culasse. Il suffit pour cela d'accéder au moyen de blocage en rotation du manchon et de la pièce adaptatrice par rapport au moyeu, et de débloquer en rotation ces éléments, puis d'extraire l'arbre d'usinage à l'extérieur du boîtier, par le trou cylindrique constitué par l'alignement du perçage transversal du manchon et du trou d'extraction des pièces situées à l'extérieur du boîtier.

Une telle fonction s'avère particulièrement utile dans le cas de l'usinage de petits moteurs thermiques, pour lesquels il s'avère nécessaire de fixer l'outillage à la culasse.

Toujours, selon l'invention, en disposant d'un jeu d'arbres d'usinage, comportant tous un moyeu au diamètre nominal du perçage transversal du fourreau, et des parties formant tige pilote de diamètres respectivement différents, le professionnel peut interchanger et ajuster sans difficulté l'arbre d'usinage, et donc la tige-pilote au guide de tige de soupape par rapport auquel il doit rectifier le siège.

Grâce à l'invention, la liberté en translation selon la hauteur de l'arbre d'usinage permet, non seulement son extraction complète de l'outillage, mais aussi son ajustement en hauteur par rapport à la pièce à usiner ; il suffit pour cela de libérer l'arbre d'usinage par rapport au manchon d'accouplement. L'arbre d'usinage peut alors coulisser librement par rapport au reste de l'outillage, et être disposé par l'utilisateur à une hauteur compatible avec la position du guide du siège à rectifier, en ce qui concerne le pilote, et avec la position du siège, en ce qui concerne l'outil.

Un outillage selon l'invention s'avère particulièrement simple d'emploi ou manipulation, notamment grâce à la possibilité d'extraction et à l'interchangeabilité de l'arbre d'usinage, et donc de la tige pilote, tout en laissant l'outillage en place et fixé par exemple sur le plan du joint de culasse du moteur thermique ou de la culasse.

Le moyen de règlage en hauteur, dit de "prise de passe", permet essentiellement la descente progressive de l'outil d'usinage, au fur et à mesure de l'opération de rectification. Et sa course en hauteur peut être totalement insuffisante pour positionner l'outil en hauteur, avant ou pendant l'usinage. Si cette course est insuffisante, alors l'arbre d'usinage peut être désolidarisé en rotation, ajusté en hauteur, et solidarisé à nouveau, avec le manchon d'accouplement.

Ces différents ajustements sont en outre facilités par le fait que l'arbre d'usinage, comprenant de manière monobloc la tige pilote et la broche, est accessible à l'utilisateur, d'une part par le haut, et d'autre part au travers du moyen de solidarisation ou piètement de l'outillage.

La présente invention est maintenant décrite par référence aux dessins annexés, dans lesquels :
- la figure 1 représente une vue de face d'un outillage conforme à l'invention, avec arrachements partiels selon un plan passant par l'axe de la broche
- la figure 2 représente une vue en coupe de la partie haute de l'outillage, montrant un ajustement en position basse extrême de l'arbre d'usinage, et donc de la broche

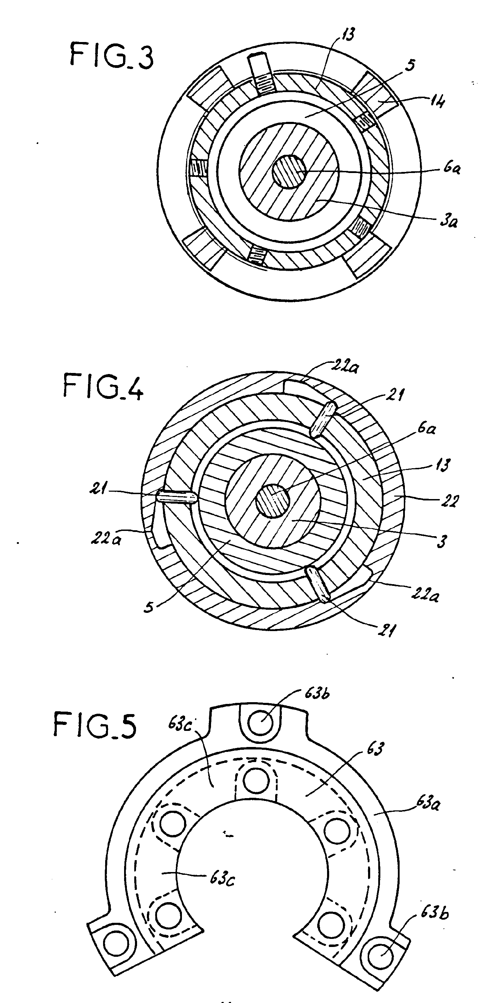

- la figure 3 représente une vue en coupe selon la ligne II.II de la figure 1 du même outillage
- la figure 4 représente une vue en coupe selon la ligne III.III de la figure 1 du même outillage
- la figure 5 représente une vue de dessus du moyen de solidarisation ou support appartenant à l'outillage selon les figures 1 à 4.

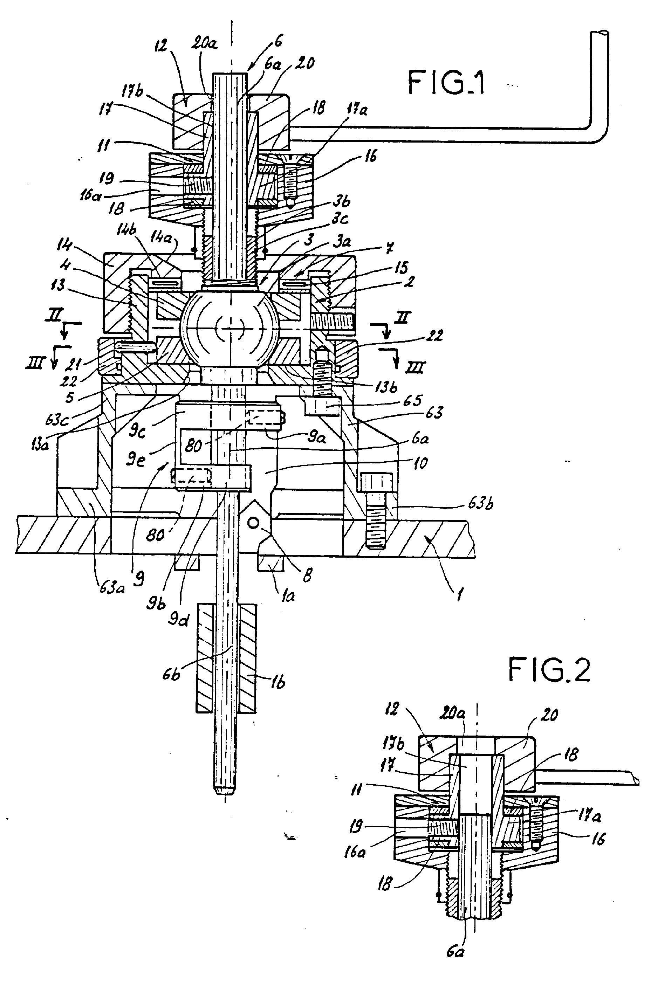

Conformément à la figure 1, on a représenté sous la référence numérique 1 une culasse de moteur thermique comportant un siège (la) de soupape à former ou rectifier, de manière coaxiale à un guide (1b) de tige de soupape.

Un outillage selon l'invention comporte les éléments principaux suivants :
- un boîtier (2)
- un moyen de solidarisation (63) ou support du boîtier (2) par rapport à la culasse (1) à usiner
- un fourreau (3) pourvu d'une noix sphérique (3a) d'orientation, montée à l'intérieur du boîtier (2), ce fourreau présentant un perçage transversal (3b) dont l'axe passe par le centre de la noix (3a)
- deux sièges (4) et (5) de sphéricité concave complémentaire à la noix sphérique (3a), disposés à l'intérieur du boîtier, de part et d'autre de la noix
- un arbre d'usinage (6) monobloc, comportant selon sa hauteur une première partie (6a), ou moyeu formant broche, ayant un diamètre nominal prédéterminé, et une deuxième partie (6b) de diamètre plus faible formant tige pilote
- un moyen (7) de blocage du fourreau (3), en orientation et en position comme décrit ci-après
- un outil (8) d'usinage en rotation, monté à l'extrémité de la broche (6a) du côté de la tige pilote (6b), par l'intermédiaire, d'une part d'une pièce adaptatrice (9), montée et calée en rotation sur le moyeu ou broche (6a), à l'extrémité de ce dernier du côté de la tige pilote (6b), et d'autre part d'un dispositif (10) porte-outil monté verticalement sur la pièce adaptatrice (9), supportant l'outil (8) proprement dit
- un moyen (11) de réglage en hauteur de l'arbre d'usinage (6), et par conséquent de la broche (6a), par rapport au fourreau (3); ce moyen (11) est monté sur le fourreau (3), à l'extérieur du boîtier (2), à l'opposé de l'outil d'usinage (8)
- un moyen (12) d'entrainement en rotation de l'arbre (6) d'usinage, toujours à l'extérieur du boîtier (2), au dessus du moyen (11) de réglage en hauteur, et à l'opposé de l'outil d'usinage (8)

Le boîtier (2), de forme cylindrique dont l'axe passe par le centre de la noix sphérique (3a), comporte deux parties montées l'une sur l'autre, à savoir un pot (13) comportant un filetage extérieur (13a), et un couvercle (14) sous forme d'écrou vissable de manière réglable sur le pot (13). De part et d'autre de la noix sphérique (3a), le boîtier comporte deux ouvertures respectivement, à savoir (14a) dans le couvercle (14), et (13a) dans le pot (13) ; chacune de ces ouvertures permet le passage de la broche (6a), avec débattement angulaire comme décrit ci-après. Les deux sièges (4 et 5), en dehors de leur surface sphérique concave au contact de la noix (3a), présentent chacun la forme d'une plaquette cylindrique. Le siège inférieur (5) est mobile dans un plan de référence, sur la surface interne (13b), plane, située à l'intérieur du pot (13), et donc du boîtier (2). Le siège supérieur (4) repose librement sur la noix sphérique (3a). Le couvercle ou écrou comporte par ailleurs une portée annulaire (14b), située à l'intérieur du boîtier (2), prenant appui lors du vissage contre le siège supérieur (4), par l'intermédiaire d'une butée à aiguille (15).

Le moyen de réglage en hauteur (11), ou prise de passe, de l'arbre d'usinage (6) comporte, d'une part un écrou réglable (16), vissé sur un manchon (3c) fileté appartenant au fourreau (3), et d'autre part un manchon (17) d'accouplement en rotation avec le moyeu (6a) de l'arbre d'usinage, monté libre en rotation sur l'écrou (16). Cette liberté en rotation est obtenue par l'intermédiaire d'une nervure radiale (17a) appartenant au manchon d'accouplement (17), et de deux bagues de frottement (18) de part et d'autre de la nervure (17a), dans un logement prévu à cet effet dans l'écrou (16). La nervure radiale (17a) comporte un taraudage pour le passage d'une vis (19) de blocage en rotation du manchon d'accouplement (17) par rapport au moyeu (6a). L'écrou (16) comporte un perçage radial (16a), accédant au logement contenant la nervure (17a) du manchon d'accouplement (17) ; par rotation de l'écrou (16) par rapport à la nervure (17a), il est possible d'amener en coïncidence le perçage (16a) avec la tête de la vis (19), et par conséquent de bloquer ou débloquer cette dernière de manière réversible, pour libérer ou bloquer le moyeu (6a) par rapport au manchon (17).

Le moyen (12) d'entrainement en rotation consiste en une manivelle dont la tête (20) est montée à demeure, et bloquée en rotation sur le manchon d'accouplement (17) grâce à un méplat non représenté. La tête (20) comporte un perçage transversal (20a), permettant l'extraction de l'arbre d'usinage (6), comme décrit ci-après.

Comme le montre la figure 1, les pièces de l'outillage situées à l'extérieur du boîtier (2), et du côté opposé à l'outil d'usinage (8), à savoir le manchon d'accouplement (17) appartenant au moyen (11) de réglage en hauteur de l'arbre d'usinage (6), et la tête de manivelle (20), déterminent ensemble un trou d'extraction de l'arbre (6), constitué par l'alignement du perçage (17b) du manchon (17) et du perçage (20a) de la tête (20), ceci selon l'axe du perçage transversal (3b) du fourreau (3) ; le diamètre de ces différents perçages étant au moins égal à celui du moyeu (6a), en dehors du fourreau (3).

Afin de centrer la noix sphérique (3a) au départ d'une opération d'usinage, le boîtier (2), et plus précisémment le pot (13) comportent, d'une part trois plots (21) de centrage du siège mobile (5), disposés radialement à 120 ° les uns des autres, et mobiles en translation par rapport au boîtier (2), et d'autre part une bague (22) d'actionnement disposée concentriquement à l'extérieur du boîtier (2), comportant trois rampes (22a), internes, pouvant assurer par rotation dans un sens prédéterminé une poussée radiale vers le centre du boîtier, des trois plots (22) respectivement.

Quant au moyen de solidarisation (63) du boîtier (2), il consiste en un support démontable par rapport à ce dernier. Ce support comprend, d'un côté un piètement (63a) avec des perçages (63b) pour des goujons d'assemblage sur la culasse (1) à usiner, et de l'autre côté une table (63c), pour la réception et la fixation du boîtier (2) par des vis (65). De cette manière, il est possible d'utiliser le même outillage, et plus précisément les différentes pièces autres que le support (63), pour différentes culasses ou moteurs, en adaptant à chaque fois le support (63).

Le fonctionnement d'un outillage selon l'invention se déduit de la description précédente, et peut être rappelé brièvement selon les phases opératoires suivantes :
- par dévissage du couvercle (14), on désserre les sièges (4, 5) l'un par rapport à l'autre, et on libère l'ensemble constitué par la noix sphérique (3a) au contact des deux sièges (4, 5), par rapport à la surface de glissement (13 b)
- par rotation de la bague (22) dans le sens inverse à celui des aiguilles d'une montre, on centre le siège (5), et par conséquent la noix (3a) et le siège supérieur (4) reposant sur cette dernière ; par rotation de la bague dans l'autre sens, on libère le siège (5) centré
- l'outillage étant été fixé sur la culasse (1) par le support (63), on positionne la tige pilote (6b) dans le guide (1b), ce qui détermine l'orientation de la noix (3a), et sa position par rapport au plan de glissement (13b)
- en vissant le couvercle (14), la butée (14b) vient à la fois serrer les deux sièges (4 et 5) contre la noix (3a), et contre la surface interne (13b)
- à partir de la position bloquée ainsi obtenue, par réglage de l'écrou (16) on amène l'outil d'usinage (8) au contact de la surface (1a) à rectifier
- par rotation de la manivelle, il est alors possible d'usiner le siège (1a).

La pièce adaptatrice (9) à la forme d'un étrier comportant deux ailes (9c,9d), ou plaques annulaires, disposées perpendiculairement par rapport à l'arbre d'usinage (6), et reliées entre elles par une âme (9e) ou partie rigide. Ces deux ailes comportent deux trous filetés centraux débouchants (9a,9b), respectivement disposés radialement par rapport à l'axe de l'arbre d'usinage (6), faisant entre eux un angle de 180°, décalés en hauteur l'un par rapport à l'autre, et équipés chacun d'une vis (80) de blocage en rotation.

La possibilité de coulissement relatif entre la pièce adaptatrice (9) et la broche (6a) permet un ajustement indépendant ou complémentaire de l'outil d'usinage (8), par rapport au siège (1a).

Cette disposition de la pièce adaptatrice (9) permet d'équilibrer les efforts d'usinage, tout en autorisant une fixation réversible par rapport à la broche.

## Revendications

1. Outillage pour usinage de précision, par exemple pour la rectification de sièges (1a) de soupape de moteur thermique, comprenant :
- un boîtier (2)
- un moyen (63) de solidarisation du boîtier par rapport à la pièce (1) à usiner, par exemple la culasse du moteur thermique
- un fourreau (3) pourvu d'une noix (3a) sphérique d'orientation, montée à l'intérieur du boîtier
- deux sièges (4, 5) de sphéricité concave complémentaire à la noix sphérique, disposés à l'intérieur du boîtier, de part et d'autre de ladite noix
- une broche (6a) montée librement en rotation et en translation dans le perçage transversal du fourreau , le boîtier (2) comprenant de part et d'autre de la noix sphérique respectivement deux ouvertures (13a, 14a) permettant chacune le passage de la broche avec débattement
- une tige pilote (6b) coaxiale à l'axe de la broche, prolongeant cette dernière à une extrémité, destinée à pénétrer de manière ajustée dans un trou (1b) de référence, par exemple le guide d'une tige de soupape
- un moyen (14) de blocage du fourreau en orientation
- un outil (8) d'usinage en rotation, monté à l'extrémité de la broche du côté de la tige pilote, éventuellement par l'intermédiaire d'un dispositif porte-outil (10)
- un moyen (11) de réglage en hauteur de la broche avec tige pilote, par rapport au fourreau, ledit moyen étant monté sur ce dernier, à l'extérieur du boîtier, à l'opposé de l'outil d'usinage
- un moyen (12) d'entrainement en rotation de la broche avec la tige pilote, à l'extrémité du boîtier et à l'opposé de l'outil d'usinage, caractérisé en ce que :
a) la broche (6a) et la tige pilote (6b) sont construites de manière monobloc selon un seul et même arbre (6) d'usinage interchangeable, comportant selon sa hauteur une première partie (6a) ou moyeu formant broche, ayant un diamètre nominal, et une deuxième partie (6b) de diamètre plus faible, formant tige pilote
b) la ou les pièces (17, 20) dudit outillage, situées à l'extérieur du boîtier (2) et du côté opposé à l'outil d'usinage (8), et notamment le moyen de réglage en hauteur de l'arbre d'usinage, déterminent ensemble un trou (17b, 20a) d'extraction dudit arbre d'usinage, aligné selon l'axe du perçage transversal (3b) du fourreau (3), et de diamètre au moins égal au diamètre nominal
c) une pièce adaptatrice (9) supportant l'outil d'usinage (8) est montée de manière coulissante sur le moyeu ou broche (6a) de l'arbre d'usinage (6), et câlée sur l'extrémité de ce dernier du côté de la tige-pilote (6b), par au moins un moyen réversible (80) de blocage accessible à l'utilisateur par le moyen (63) de solidarisation du boîtier, ceci permettant l'extraction de l'arbre d'usinage interchangeable par le trou (17b,20a) d'extraction situé à l'extérieur du boîtier (2)
d) le moyen (11) de réglage en hauteur de l'arbre d'usinage comporte, d'une part un manchon (17) d'accouplement en rotation avec le moyeu (6a) de l'arbre d'usinage, mobile en translation par rapport au fourreau, et d'autre part un moyen réversible (19) de blocage en rotation du manchon par rapport au moyeu, accessible (16a) à une manipulation par l'extérieur de l'utilisateur.

2. Outillage selon la revendication 1, caractérisé en ce qu'il est associé à un jeu d'arbres d'usinage (6), comportant tous un moyeu (6a) au diamètre nominal, et des parties (6b) formant tige pilote de diamètres respectivement différents.

3. Outillage selon la revendication 1, caractérisé en ce que le moyen (11) de réglage en hauteur comprend un écrou (16) réglable vissé sur un manchon fileté (3c) appartenant au fourreau (3), le manchon d'accouplement (17) étant monté libre en rotation sur ledit écrou, et ce dernier comprenant un perçage radial (16c) d'accès au moyen réversible (19) de blocage en rotation, tel qu'une vis, dudit manchon par rapport audit moyen.

4. Outillage selon la revendication 1, caractérisé en ce que le moyen d'entrainement en rotation de l'arbre d'usinage consiste en une manivelle, dont la tête (20) est montée à demeure et bloquée en rotation sur le manchon (17) d'accouplement, et comporte un perçage transversal (20a) d'extraction de l'arbre (6) d'usinage.

5. Outillage selon la revendication 1, caractérisé en ce que le moyen de solidarisation (63) du boîtier (2) consiste en un support démontable par rapport audit boîtier, comprenant d'un côté un piètement (63a) avec des perçages pour des goujons d'assemblage sur la pièce (1) à usiner, et de l'autre côté une table (63c) de réception et fixation du boîtier.

6. Outillage selon la revendication 1, caractérisé en ce que le boîtier (2) comporte, d'une part trois plots (21) de centrage du siège (5) mobile, disposés radialement à 120° les uns des autres, et mobiles en translation par rapport au boîtier, et d'autre part une bague (22) d'actionnement disposée concentriquement à l'extérieur du boîtier, comportant trois rampes (22a) internes de poussée radiale vers le centre du boîtier, en relation avec les trois plots respective ment.

7. Outillage selon la revendication 1, caractérisé en ce que le boîtier comprend, d'une part un pot (13) comprenant la surface (13b) interne pour le glissement dans son plan de l'un (5) des sièges, et d'autre part un couvercle (14) vissable sur le boîtier, comprenant une portée annulaire (14b) interne, prenant appui par vissage contre l'autre siège (4), notamment par l'intermédiaire d'une butée à aiguilles (15).

8. Outillage pour usinage de précision selon la revendication 1, caractérisé en ce que la pièce adaptatrice (9) comporte deux trous filetés débouchant (9a,9b), disposés radialement par rapport à l'axe de l'arbre d'usinage (6), faisant entre eux un angle de 180°, décalés en hauteur l'un par rapport à l'autre, et équipés chacun d'une vis (80) de blocage en rotation sur le moyeu de l'arbre d'usinage (6).

9. Outillage selon la revendication 8, caractérisé en ce que la pièce adaptatrice (9) a la forme d'un étrier comportant deux ailes (9c,9d), disposées perpendiculairement par rapport à l'arbre d'usinage (6), et reliées entre elles par une âme, les deux ailes comportant les deux trous filetés débouchant (9a,9b) respectivement.

## Patentansprüche

1. Arbeitsgerät zur Präzisionsbearbeitung, zum Beispiel zum Schleifen von Ventilsitzen (1a) von Verbrennungsmotoren, enthaltend:
- ein Gehäuse (2),
- eine Einrichtung (63) zum Befestigen des Gehäuses an dem zu bearbeitenden Teil (1), zum Beispiel dem Zylinderkopf des Verbrennungsmotors,
- eine Hülse (3), die mit einer in dem Inneren des Gehäuses montierten kugelförmigen Ausrichtnuß (3a) versehen ist,
- zwei in dem Inneren des Gehäuses beidseits der Nuß angeordnete, zu der kugelförmigen Nuß komplementär konkav gestaltete Aufnahmen (4, 5),
- eine bezüglich Rotation und Translation in der Durchgangsborung der Hülse frei beweglich montierte Welle (6a), wobei das Gehäuse (2) beidseits der kugelförmigen Nuß insgesamt zwei Öffnungen (13, 14a) umfaßt, welche jeweils den Durchtritt der Welle mit Verschiebbarkeit derselben erlauben,
- eine zu der Achse der Welle koaxiale Führungsstange (6b), welche die letztere zu einem Ende verlängert, das dazu vorgesehen ist, auf abgestimmte Weise in eine Referenzbohrung (1b), zum Beispiel die Führung einer Ventilspindel, einzugreifen,
- Mittel (14) zum Festklemmen der Hülse in ihrer Ausrichtung,
- ein Werkzeug (8) zur Drehbearbeitung, das an dem Ende der Welle auf der Seite der Führungsstange, ggf. mittels einer Werkzeughaltevorrichtung (10), montiert ist,
- Mittel (11) zur Höheneinstellung der mit der Führungsstange versehenen Welle bezogen auf die Hülse, wobei die Mittel auf der letzteren außerhalb des Gehäuses und gegenüber von dem Bearbeitungswerkzeug montiert sind,
- Mittel (12) für den Drehantrieb der mit der Führungsstange versehenen Welle, die an dem Ende des Gehäuses und gegenüber von dem Bearbeitungswerkzeug angeordnet sind, dadurch gekennzeichnet, daß
a) die Welle (6a) und die Führungsstange (6b) in einstückiger Weise längs einer einzigen austauschbaren Arbeitsspindel (6) ausgebildet sind, die längs ihrer Höhe einen ersten Abschnitt (6a) oder eine Nabe aufweist, welche(r) eine Welle mit einem Nenndurchmesser bildet, und die einen eine Führungsstange bildenden zweiten Abschnitt (6b) mit geringerem Durchmesser umfaßt,
b) das oder die Teile (17, 20) des Arbeitsgerätes, die außerhalb des Gehäuses (2) und an der Seite gegenüber von dem Bearbeitungswerkzeug (8) gelegen sind, und insbesondere die Mittel zur Höheneinstellung der Arbeitsspindel, zusammen für die Arbeitsspindel eine Herausnahmeöffnung (17b, 20a) bestimmen, die längs der Achse der Durchgangsbohrung (3b) der Hülse (3) ausgerichtet ist und einen wenigstens dem Nenndurchmesser entsprechenden Durchmesser aufweist,
c) ein das Bearbeitungswerkzeug (8) tragendes Adapterteil (9) verschiebbar auf der Nabe oder Welle (6a) der Arbeitsspindel (6) montiert und auf dem auf der Seite der Führungsstange (6b) gelegenen Ende der Arbeitsspindel wenigstens mittels reversibler Blockiermittel (80) festgeklemmt ist, die für den Anwender durch die Einrichtung (63) zum Befestigen des Gehäuses zugänglich sind, was das Herausnehmen der auswechselbaren Arbeitsspindel aus der außerhalb des Gehäuses (2) gelegenen Herausnahmeöffnung (17b, 20a) ermöglicht,
d) die Mittel (11) zur Höheneinstellung der Arbeitsspindel einerseits eine bezogen auf die Hülse in Translationsrichtung bewegbare Muffe (17) zur Kupplung mit der Nabe (6a) der Arbeitsspindel in Drehrichtung und andererseits für eine Manipulation durch den Anwender von außen zugängliche (16a) reversible Mittel (19) zur Blockierung der Muffe gegenüber der Nabe in Drehrichtung umfaßt.

2. Arbeitsgerät nach Anspruch 1, dadurch gekennzeichnet, daß es einem Satz von Arbeitsspindel (6) zugeordnet ist, die jeweils eine Nabe (6a) mit Nenndurchmesser und Abschnitte (6b) umfassen, welche Führungsstangen mit jeweils unterschiedlichen Durchmessern bilden.

3. Arbeitsgerät nach Anspruch 1, dadurch gekennzeichnet, daß die Mittel (11) zur Höheneinstellung eine Stellmutter (16) umfassen, die auf eine zu der Hülse (3) gehörende Gewindemuffe (3c) aufgeschraubt ist, wobei die Kupplungsmuffe (17) frei drehbar auf dieser Mutter montiert ist und die letztere eine Radialbohrung (16c) als Zugang zu reversiblen Mitteln (19), wie eine Schraube, zur Blockierung der Drehbewegung der Muffe gegenüber diesen Mitteln umfaßt.

4. Arbeitsgerät nach Anspruch 1, dadurch gekennzeichnet, daß die Mittel für den Drehantrieb der Arbeitsspindel aus einer Kurbel bestehen, deren Kopf (20) fest und in Drehrichtung blockiert auf der Kupplungsmuffe (17) montiert ist und eine Durchgangsbohrung (20a) zur Herausnahme der Arbeitsspindel (6) umfaßt.

5. Arbeitsgerät nach Anspruch 1, dadurch gekennzeichnet, daß die Einrichtung (63) zum Befestigen des Gehäuses (2) aus einem bezogen auf das Gehäuse demontierbaren Träger besteht, der einerseits einen Fuß (63a) mit Bohrungen für Stiftschrauben zur Installation auf dem zu bearbeitenden Teil (1) und andererseits einen Tisch (63c) zur Aufnahme und Befestigung des Gehäuses aufweist.

6. Arbeitsgerät nach Anspruch 1, dadurch gekennzeichnet, daß das Gehäuse (2) einerseits drei Zentrierstifte (21) für die bewegliche Aufnahme (5) umfaßt, die zueinander radial unter 120 ° angeordnet und bezogen auf das Gehäuse in Translationsrichtung beweglich sind, und andererseits einen konzentrisch außerhalb des Gehäuses angeordneten Betätigungsring (22) umfaßt, der drei jeweils in Verbindung mit den drei Stiften stehende innere Rampen (22a) für radialen Druck gegen die Mitte des Gehäuses aufweist.

7. Arbeitsgerät nach Anspruch 1, dadurch gekennzeichnet, daß das Gehäuse einerseits einen Topf (13) umfaßt, der die Innenfläche (13b) für das Gleiten einer (5) der Aufnahmen in seiner Ebene aufweist, und andererseits eine auf das Gehäuse schraubbare Kappe (14) umfaßt, die einen inneren kreisförmigen Bereich (14b) aufweist, der sich durch Verschraubung gegen die andere Aufnahme (4) abstützt, insbesondere mittels eines Nadellagers (15).

8. Werkzeug zur Präzisionsbearbeitung nach Anspruch 1, dadurch gekennzeichnet, daß das Adapterteil (9) zwei Durchgangslöcher mit Gewinde (9a, 9b) umfaßt, die radial zu der Achse der Arbeitsspindel (6) angeordnet sind, zwischen sich einen Winkel von 180° begrenzen, zueinander in der Höhe abgesetzt sind und jeweils mit einer Schraube (80) versehen sind, um die Drehbewegung zu der Nabe der Arbeitsspindel (6) zu blockieren.

9. Arbeitsgerät nach Anspruch 8, dadurch gekennzeichnet, daß das Adapterteil (9) die Form eines Bügels mit zwei senkrecht zu der Arbeitsspindel (6) angeordneten Schenkeln (9c, 9d) aufweist, die untereinander mit einem Steg verbunden sind, wobei jeder der Schenkel eines der beiden Durchgangslöcher (9a, 9b) mit Gewinde umfaßt.

## Claims

1. Tool for precision machining, for example for the grinding of thermal-engine valve seats (1a), comprising:
- a housing (2),
- a means (63) for fixing the housing relative to the part (1) to be machined, for example the cylinder head of the thermal engine,
- a sleeve (3) equipped with a spherical orientation plug (3a) mounted inside the housing,
- two seats (4, 5) of concave sphericity complementary with the spherical plug and arranged inside the housing on either side of the said plug,
- a spindle (6a) mounted freely in terms of rotational and translational motion in the transverse bore of the sleeve, the housing (2) possessing respectively, on either side of the spherical plug, two orifices (13a, 14a) each allowing the passage of the spindle with movement,
- a pilot rod (6b) coaxial with the axis of the spindle, extending the latter at one end and intended for penetrating with an exact fit into a reference hole (1b), for example the guide of a valve stem,
- a means (14) for blocking the sleeve in terms of orientation,
- a rotary machining tool (8) mounted at the end of the spindle on the same side as the pilot rod, if appropriate by means of a toolholder device (10),
- a means (11) for adjusting the height of the spindle together with the pilot rod in relation to the sleeve, the said means being mounted on the latter outside the housing and opposite to the machining tool,
- a means (12) for driving the spindle together with the pilot rod in rotation, at the end of the housing and opposite to the machining tool,
- characterised in that:
a) the spindle (6a) and the pilot rod (6b) are constructed in one piece according to one and the same interchangeable machining shaft (6), comprising in terms of its height a first part (6a) or hub, forming the spindle, having a nominal diameter, and a second part (6b) of smaller diameter forming the pilot rod,
b) the part or parts (17, 20) of the said tool which are located outside the housing (2) and on the opposite side to the machining tool (8), and especially the height adjustment means of the machining shaft, together define a hole (17b, 20a) for the extraction of the said machining shaft, aligned along the axis of the transverse bore (3b) of the sleeve (3) and of a diameter at least equal to the nominal diameter,
c) an adaptor piece (9) supporting the machining tool (8) is mounted slidably on the hub or spindle (6a) of the machining shaft (6) and is keyed on the end of the latter on the same side as the pilot rod (6b) by at least one reversible blocking means (80) accessible to the user by the housing-fixing means (63), this making it possible to extract the interchangeable machining shaft via the extraction hole (17b, 20a) located outside the housing (2),
d) the means (11) for adjusting the height of the machining shaft comprises, on the one hand, a bush (17) for rotational coupling to the hub (6a) of the machining shaft, movable in terms of translational motion relative to the sleeve and, on the other hand, a reversible means (19) for blocking the bush in terms of rotation relative to the hub, accessible (16a) to a manipulation by the user from outside.

2. Tool according to Claim 1, characterised in that it is associated with a set of machining shafts (6), all comprising a hub (6a) of the nominal diameter and parts (6b) forming a pilot rod of respectively different diameters.

3. Tool according to Claim 1, characterised in that the height adjustment means (11) comprises an adjustable nut (16) screwed onto a threaded bush (3c) belonging to the sleeve (3), the coupling bush (17) being mounted freely in terms of rotation on the said nut, and the latter having a radial bore (16c) for access to the reversible means (19), such as a screw, for blocking the said bush in terms of rotation relative to the said means.

4. Tool according to Claim 1, characterised in that the means for driving the machining shaft in rotation consists of a crank, the head (20) of which is mounted permanently and blocked in terms of rotation on the coupling bush (17) and has a transverse bore (20a) for extraction of the machining shaft (6).

5. Tool according to Claim 1, characterised in that the means (63) for connecting the housing (2) consists of a support removable relative to the said housing, comprising, on one side, a mount (63a) with bores for pins for assembly on the part (1) to be machined and, on the other side, a table (63c) for receiving and fastening the housing.

6. Tool according to Claim 1, characterised in that the housing (2) possesses, on the one hand, three studs (21) for centring the movable seat (5), which are arranged radially at 120° relative to one another and which are movable in terms of translational motion relative to the housing and, on the other hand, an actuating ring (22) arranged concentrically outside the housing and having three inner ramps (22a) for a radial push towards the centre of the housing, related respectively to the three studs.

7. Tool according to Claim 1, charaterised in that the housing comprises, on the one hand, a pot (13) having the inner surface (13b) for the sliding of one (5) of the seats in its plane and, on the other hand, a cover (14) screwable onto the housing and having an inner annular bearing surface (14b) bearing by screwing against the other seat (4), especially by means of a needle bearing (15).

8. Tool for precision machining according to Claim 1, characterised in that the adaptor piece (9) has two open-ended threaded holes (9a, 9b) arranged radially relative to the axis of the machining shaft (6), forming an angle of 180° between them, offset in terms of height relative to one another and each equipped with a screw (80) for blocking in terms of rotation on the hub of the machining shaft (6).

9. Tool according to Claim 8, characterised in that the adaptor piece (9) has the form of a stirrup comprising two wings (9c, 9d) arranged perpendicularly relative to the machining shaft (6) and connected to one another by means of a web, the two wings respectively having the two open-ended threaded holes (9a, 9b).
